# FASCICULE DE BREVET EUROPEEN

(11) **EP 1 350 679 B1**
(45) Date de publication et mention de la délivrance du brevet: **03.01.2007**
(21) Numéro de dépôt: 03290589.5
(22) Date de dépôt: 10.03.2003
(51) Int. Cl.: B60R 13/08

(54) **Panneau d'étanchéité pour véhicule automobile**
Dichtplatte für ein Kraftfahrzeug
Sealing panel for a motor vehicle

(30) Priorité: 13.03.2002 FR 0203190
(43) Date de publication de la demande: 08.10.2003
(73) Titulaire: Sofitec SA, 78530 Buc (FR)
(72) Inventeur: Proux, Georges, 78220 Viroflay (FR)
(74) Mandataire: Cabinet Martinet & Lapoux

(56) Documents cités:
- DE-A- 4 416 972
- DE-A- 19 501 292
- US-A- 4 655 496
- US-A- 5 345 720
- US-A- 5 456 513

## Description

L'invention concerne un panneau d'étanchéité pour véhicule automobile, du type comprenant une feuille de matière thermoplastique qui comporte sur une face, une couche ou un cordon continu ou discontinu de matière adhésive pour sa fixation sur un support, tel qu'une tôle par exemple.

Ces panneaux sont notamment utilisés pour l'étanchéité et l'insonorisation des portes, des pavillons et des capots moteurs des véhicules automobiles et sont en général formés d'une feuille de matière thermoplastique alvéolaire, telle notamment qu'une mousse de polyoléfine à cellules fermées, qui peut être ou non associée à une couche de matière insonorisante, à un film de matière thermoplastique compacte, ou autre, et qui subit un thermoformage avant d'être fixée sur une tôle de support.

La fixation de ces panneaux est assurée de façon commode par une couche ou un cordon de matière adhésive qui est déposée sur une face de la feuille précitée, en général le long d'une partie au moins de la périphérie de cette feuille et qui peut être recouverte d'un papier protecteur jusqu'à son utilisation. La fixation du panneau sur la tôle support est alors réalisée par retrait du papier protecteur, mise en contact de la couche ou du cordon adhésif et de la tôle, et compression de la couche ou du cordon adhésif sur la tôle.

Ce procédé de pose est très apprécié des constructeurs, car il leur évite de manipuler, sur une chaîne de montage, des matières adhésives qui sont plus ou moins toxiques, qui doivent être déposées manuellement sur les panneaux ou sur les tôles, qui peuvent baver sur les panneaux et les tôles, etc.

On a cependant constaté, dans certains cas, que les variations cycliques de température auxquelles ces panneaux sont soumis après leur fixation, lors des tests climatiques réalisés par les constructeurs, pouvaient entraîner des déchirures de la couche ou du cordon adhésif, provoquées par les contraintes auxquelles la matière adhésive est soumise du fait du retrait ou rétreint de la feuille d'étanchéité dans son plan, ces déchirures se traduisant par des défauts de fixation du panneau sur la tôle support. Ce retrait est peu important et sans conséquence lorsque la feuille de mousse de polyoléfine a une épaisseur et une densité relativement faibles, car cette feuille est alors relativement facilement déformable et extensible dans son plan. Toutefois, quand l'épaisseur et la densité de la mousse de polyoléfine sont plus élevées, la feuille d'étanchéité a une résistance plus importante à l'étirement dans son plan et son retrait provoqué par les cycles thermiques précités se traduit par la détérioration ou la destruction au moins locale de la couche ou du cordon de matière adhésive.

La présente invention a notamment pour but d'apporter une solution simple, efficace et peu coûteuse à ce problème.

Elle propose à cet effet un panneau d'étanchéité pour véhicule automobile, comportant une couche ou un cordon de matière adhésive au moins au voisinage de sa périphérie pour sa fixation sur une tôle support, et sur lequel les cycles thermiques, lors d'essais climatiques, n'ont pas d'influence.

Elle a également pour objet un panneau du type précité, comprenant une feuille de matière plastique alvéolaire qui peut avoir toute épaisseur et/ou densité désirée, sans influence sur sa fixation par une couche ou un cordon de matière adhésive sur une tôle support.

L'invention propose, à cet effet, un panneau d'étanchéité pour véhicule automobile, comprenant au moins une feuille de matière thermoplastique telle qu'une mousse de polyoléfine à cellules fermées, comportant sur une face une couche ou un cordon de matière adhésive continue ou discontinue pour sa fixation sur un support tel par exemple qu'une tôle, caractérisé en ce que ladite feuille comporte, au voisinage de la couche ou du cordon de matière adhésive, une zone formant réserve de matière permettant de compenser au moins partiellement une variation de dimension de la feuille.

Avantageusement, dans un mode de réalisation préféré de l'invention, cette zone formant réserve de matière est à configuration ondulée ou analogue.

Toutes les variations de dimension de la feuille de matière thermoplastique peuvent ainsi être absorbées par cette zone formant réserve de matière, et ne sont donc pas transmises à la matière adhésive qui assure la fixation du panneau sur le support.

Cette zone formant réserve de matière absorbe les variations de dimension de la feuille de matière thermoplastique qui sont dues aussi bien à un retrait provoqué par des cycles thermiques lors d'essais climatiques, comme indiqué plus haut, qu'à d'éventuelles déformations de la feuille provoquées par des contraintes de dilatation thermique différentielles entre le panneau et son support.

Cette zone formant réserve de matière est donc capable d'absorber au moins partiellement des déformations de la feuille de matière thermoplastique dues à des dilatations et/ou des contractions dans le plan de cette feuille.

Lorsque la matière adhésive se trouve au voisinage de la périphérie de la feuille de matière thermoplastique, la zone formant réserve de matière se trouve radialement à l'intérieur de cette feuille par rapport à la matière adhésive.

De façon simple, cette zone à réserve de matière est formée par au moins une ondulation de la feuille de matière thermoplastique, réalisée lors du thermoformage de cette feuille.

Bien entendu, cette ondulation peut être formée en saillie sur une face de ladite feuille ou sur l'autre face de cette feuille ou bien encore sur les deux faces de celle-ci, l'ondulation pouvant avoir toute section transversale désirée.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe d'un panneau d'étanchéité fixé sur une tôle support par un cordon de matière adhésive ;
- la figure 2 est une vue correspondant à la figure 1 et représente ce panneau après un retrait provoqué par des cycles thermiques réalisés lors d'essais climatiques ;
- la figure 3 est une vue correspondant à la figure 1 et représente un panneau selon l'invention.

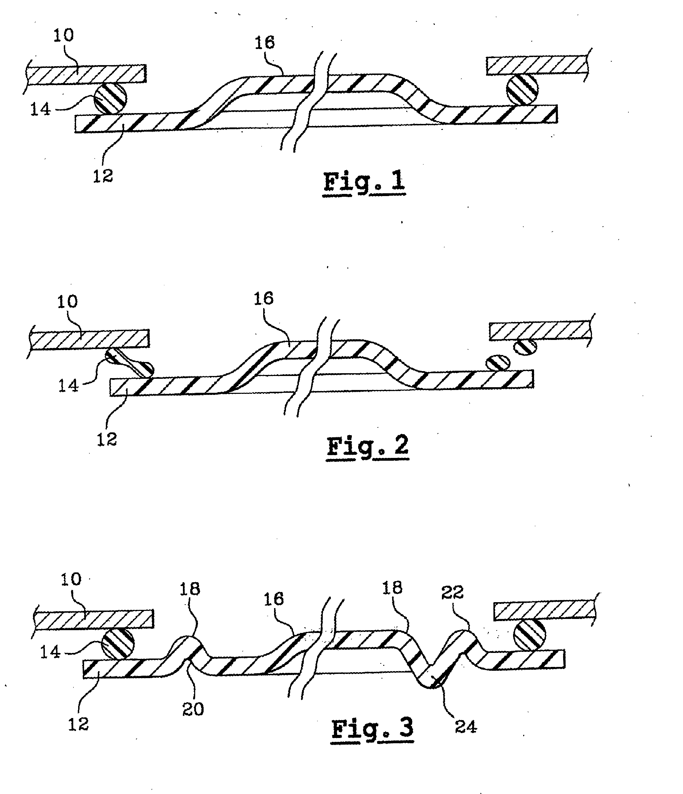

En figure 1, la référence 10 désigne une tôle, telle par exemple qu'une tôle de porte de véhicule automobile, sur laquelle un panneau d'étanchéité et/ou d'insonorisation 12 est fixé par un cordon 14 de matière adhésive qui s'étend en général le long de la périphérie du panneau 12, de façon continue ou discontinue, sur la face du panneau 12 tournée vers la tôle 10.

Le panneau 12 comprend au moins une feuille 16 de matière thermoplastique alvéolaire, telle notamment qu'une mousse de polyoléfine à cellules fermées, par exemple de polyéthylène réticulé ou de polypropylène non réticulé, qui est thermoformée pour avoir une configuration adaptée à celle de la tôle 10 sur laquelle elle est posée et à celle des éventuels éléments ou équipements qui peuvent être fixés sur cette tôle 10 et qui sont recouverts par le panneau 12.

D'une façon bien connue de l'homme du métier, les cordons 14 de matière adhésive qui sont déposés sur les feuilles thermoformées 16 peuvent être recouverts d'un matériau protecteur, par exemple d'un papier siliconé, pour leur stockage et leur transport avant utilisation.

Pour la fixation d'un panneau 12 sur une tôle 10, le papier protecteur recouvrant le cordon 14 de matière adhésive est retiré, le panneau 12 est positionné sur la tôle 10, le cordon de matière adhésive 14 est appliqué sur la tôle et est ensuite comprimé sur sa longueur, par exemple au moyen d'une roulette ou analogue passée sur la périphérie du panneau 12.

D'une façon également bien connue de l'homme du métier, les panneaux 12 selon l'invention peuvent comprendre en plus de la feuille thermoformée 16 une couche de matière d'insonorisation et/ou d'isolation thermique, un film de matière plastique ou thermoplastique compacte sur l'une ou l'autre de ses faces et/ou tout autre moyen permettant de renforcer la rigidité, d'améliorer les qualités d'étanchéité, d'insonorisation et/ou d'isolation thermique du panneau, d'améliorer son aspect, etc.

Lorsque les tôles 10 sur lesquelles sont fixés des panneaux 12 sont soumises à des essais climatiques comportant des cycles thermiques prédéterminés, les variations de température appliquées aux feuilles 16 de matière thermoplastique provoquent un retrait de ces feuilles dans leur plan, comme représenté en figure 2, ce retrait pouvant atteindre plusieurs millimètres.

Du fait de ce retrait, le cordon 14 de matière adhésive qui fixe le panneau 12 sur la tôle 10 est étiré dans une direction sensiblement perpendiculaire à son étendue longitudinale et cet étirement peut provoquer une déchirure ou une fragmentation du cordon 14 comme représenté schématiquement, ce qui entraîne des défauts plus ou moins importants de fixation du panneau 12 sur la tôle 10. Cet inconvénient est d'autant plus important que l'épaisseur et/ou la densité de la feuille 16 de matière thermoplastique alvéolaire sont élevées. Lorsque la matière thermoplastique alvéolaire utilisée a une densité de l'ordre de 50 kilos par mètre cube et que la feuille 16 a une épaisseur de 2 millimètres (ce qui correspond à une masse surfacique de 100 g/m²), la capacité de déformation élastique et d'étirement de la feuille 16 dans son plan est suffisante pour compenser au moins partiellement son retrait dû aux cycles thermiques précités et l'effort d'étirement exercé sur le cordon 14 de matière adhésive reste suffisamment faible pour être bien supporté par celui-ci.

Par contre, lorsque l'on utilise une matière alvéolaire ayant une densité de 90 kilos par mètre cube avec une épaisseur de 3 millimètres pour les feuilles 16, la masse surfacique de ces feuilles passe à 270 g/m² et leur retrait dû aux cycles thermiques précités se traduit par un étirement et une déchirure du cordon 14 de matière adhésive.

Cet inconvénient est encore plus prononcé si l'on utilise une matière alvéolaire ayant une densité volumique de 150 kilos par mètre cube avec une épaisseur de feuille de 4 millimètres, car la masse surfacique de la feuille atteint alors 600 g/m², et le retrait de cette feuille exerce une traction relativement élevée sur le cordon 14 de matière adhésive qui se déchire.

Pour éviter cet inconvénient, l'invention prévoit, comme représenté schématiquement en figure 3, de former une zone 18 à réserve de matière entre la partie périphérique de la feuille 16 comportant le cordon 14 de matière adhésive et le reste de cette feuille, de telle sorte qu'un retrait puisse être subi par la feuille 16 dans son plan sans affecter le cordon 14 de matière adhésive, c'est-à-dire sans lui transmettre d'effort susceptible d'entraîner son étirement et sa déchirure dans une direction sensiblement perpendiculaire à son étendue longitudinale.

Dans la partie gauche de la figure 3, la zone 18 à réserve de matière est formée par une simple ondulation 20 de la feuille 16, cette ondulation étant en saillie du côté de la tôle 10. Bien entendu, l'ondulation 20 pourrait être formée en saillie sur l'autre face de la feuille 16.

Dans la réalisation représentée en partie droite de la figure 3, la zone 18 à réserve de matière est une ondulation double, comportant une crête 22 en saillie du côté de la tôle 10 et une crête 24 en saillie du côté opposé. La réserve de matière formée par la zone 18 est suffisante pour compenser, au moins en majeure partie, un retrait de la feuille 16 dans son plan qui peut être de plusieurs millimètres.

La zone 18 à réserve de matière s'étend le long du cordon 14 de matière adhésive, radialement à l'intérieur de celui-ci par rapport au point central de la feuille 16.

Lorsqu'un cordon 14 de matière adhésive est déposé sur la feuille 16 en une zone éloignée de sa périphérie, une zone 18 de réserve de matière peut être formée, selon les cas, soit radialement à l'intérieur de ce cordon 14, soit radialement à l'extérieur de ce cordon par rapport à une partie centrale de la feuille 16, soit éventuellement radialement à l'intérieur et radialement à l'extérieur de ce cordon.

Cette ou ces zones 18 à réserve de matière sont réalisées de façon simple par thermoformage, lors du thermoformage précité de la feuille 16.

L'invention s'applique également à la fixation d'un panneau 12 sur la tôle 10 au moyen d'une couche de matière adhésive qui recouvre au moins une partie de la face du panneau tournée vers la tôle 10, notamment dans le cas où la tôle comporte des ouvertures ou des parties ou creux entourées par la matière adhésive précitée. Comme dans le cas précédent, une zone 18 à réserve de matière est formée dans la feuille 16 radialement à l'intérieur des parties de cette feuille collées sur la tôle 10.

## Revendications

1. - Panneau d'étanchéité pour véhicule automobile, comprenant au moins une feuille (16) de matière thermoplastique, telle par exemple qu'une mousse de polyoléfine à cellules fermées, comportant sur une face, une couche ou un cordon (14) de matière adhésive continu ou discontinu pour sa fixation sur un support tel par exemple qu'une tôle (10), **caractérisé en ce que** ladite feuille (16) comporte, au voisinage de la couche ou du cordon de matière adhésive, une zone (18) formant réserve de matière permettant de compenser au moins partiellement une variation de dimension de la feuille (16).

2. - Panneau selon la revendication 1, **caractérisé ce que** la zone (18) formant réserve de matière s'étend le long de la couche ou du cordon de matière adhésive.

3. - Panneau selon la revendication 1 ou 2, **caractérisé ce que** la zone (18) formant réserve de matière est à configuration ondulée ou analogue.

4. - Panneau selon la revendication 1, 2 ou 3, **caractérisé ce que** ladite zone (18) est destinée à compenser au moins partiellement un retrait ou un rétreint de la feuille (16) dans son plan.

5. - Panneau selon l'une des revendications précédentes, **caractérisé ce que** ladite zone (18) se trouve radialement à l'intérieur du cordon (14) de matière adhésive par rapport à une zone centrale de la feuille (16).

6. - Panneau selon l'une des revendications précédentes, **caractérisé ce que** ladite zone (18) se trouve radialement à l'intérieur d'une partie de la feuille (16) collée sur la tôle (10).

7. - Panneau selon l'une des revendications précédentes, **caractérisé ce que** ladite feuille (16) est en mousse de polyoléfine ayant une densité surfacique supérieure à 100 g/m² environ.

8. - Panneau selon l'une des revendications précédentes, **caractérisé ce que** ladite zone (18) à réserve de matière est une ondulation réalisée par thermoformage de ladite feuille (16).

## Claims

1. Sealing panel for a motor vehicle, comprising at least one sheet (16) of thermoplastic, such as for example a closed-cell polyolefin foam, comprising, on one face, a continuous or discontinuous layer or bead (14) of adhesive for fastening it to a support, such as for example a sheet-metal support (10), **characterized in that** said sheet (16) includes, in the vicinity of the layer or bead of adhesive, a region (18) forming a reserve of material that makes it possible to compensate at least partly a change in dimension of the sheet (16).

2. Panel according to Claim 1, **characterized in that** the region (18) forming a reserve of material extends along the layer or bead of adhesive.

3. Panel according to Claim 1 or 2, **characterized in that** the region (18) forming a reserve of material has a corrugated or similar configuration.

4. Panel according to Claim 1, 2 or 3, **characterized in that** said region (18) is intended to compensate at least partly for a shrinkage or contraction of the sheet (16) in its plane.

5. Panel according to one of the preceding claims, **characterized in that** said region (18) lies radially inside the bead (14) of adhesive relative to a central region of the sheet (16).

6. Panel according to one of the preceding claims, **characterized in that** said region (18) lies radially inside a portion of the sheet (16) adhesively bonded to the sheet-metal support (10).

7. Panel according to one of the preceding claims, **characterized in that** said sheet (16) is made of a polyolefin foam having a weight per unit area of greater than about 100 g/m².

8. Panel according to one of the preceding claims, **characterized in that** said region (18) forming a reserve of material is a corrugation produced by thermoforming said sheet (16).

## Patentansprüche

1. Dichtungsplatte für Kraftfahrzeug, bestehend aus mindestens einer Platte (16) aus thermoplastischem Werkstoff, wie beispielsweise einem geschlossenzelligen Polyolefinschaumstoff, die auf einer Seite eine ununterbrochene oder unterbrochene Schicht oder ein Band (14) aus Klebstoff für ihre Befestigung an einem Träger, wie beispielsweise einem Blech (10) aufweist, **dadurch gekennzeichnet, dass** die genannte Platte (16) nahe der Schicht oder dem Band aus Klebstoff eine Zone (18) aufweist, die eine Werkstoffreserve darstellt, die erlaubt, mindestens teilweise eine Abmessungsschwankung der Platte (16) auszugleichen.

2. Platte nach Patentanspruch 1, **dadurch gekennzeichnet, dass** die eine Werkstoffreserve darstellende Zone (18) sich über die Länge der Schicht oder des Bandes aus Klebstoff erstreckt.

3. Platte nach Patentanspruch 1 oder 2, **dadurch gekennzeichnet, dass** die eine Werkstoffreserve darstellende Zone (18) wellig oder ähnlich geformt ist.

4. Platte nach Patentanspruch 1, 2 oder 3, **dadurch gekennzeichnet, dass** die genannte Zone (18) dazu dient, mindestens teilweise ein Schrumpfen oder eine Querschnittsverminderung der Platte (16) in ihrer Ebene zu kompensieren.

5. Platte nach einem der vorangehenden Patentansprüche, **dadurch gekennzeichnet, dass** die genannte Zone (18) sich relativ zu einem zentralen Bereich der Platte (16) radial innerhalb des Bandes (14) aus Klebstoff befindet.

6. Platte nach einem der vorangehenden Patentansprüche, **dadurch gekennzeichnet, dass** die genannte Zone (18) sich radial innerhalb eines zentralen Bereiches der Platte (16) befindet, der auf das Blech (10) geklebt ist.

7. Platte nach einem der vorangehenden Patentansprüche, **dadurch gekennzeichnet, dass** die genannte Platte (16) aus Polyolefinschaumstoff mit einer Oberflächendichte von mehr als ungefähr 100 g/m² besteht.

8. Platte nach einem der vorangehenden Patentansprüche, **dadurch gekennzeichnet, dass** die genannte Werkstoffreservezone (18) eine Welligkeit ist, die durch Warmformung der genannten Platte (16) erzeugt wurde.
